# EUROPEAN PATENT APPLICATION

(11) **EP 4 178 013 A1**
(43) Date of publication of application: **10.05.2023**
(21) Application number: 21864577.8
(22) Date of filing: 23.08.2021
(51) Int. Cl.: H01M 50/116, H01M 50/543, H01M 50/557, H01M 50/124, B29C 65/00, H01M 50/172

(54) **SECONDARY BATTERY, SECONDARY BATTERY MANUFACTURING DEVICE AND MANUFACTURING METHOD**

(30) Priority: 07.09.2020 KR 20200114123; 29.07.2021 KR 20210100240
(71) Applicant: LG Energy Solution, Ltd., Seoul 07335 (KR)
(72) Inventor: HWANG, Won Pill, Daejeon 34122 (KR); NA, Seung Ho, Daejeon 34122 (KR); BAE, Sang Ho, Daejeon 34122 (KR); LEE, Kwan Bo, Daejeon 34122 (KR); LEE, Yoon Beom, Daejeon 34122 (KR); KIM, Shin Chul, Daejeon 34122 (KR); JUNG, Su Taek, Daejeon 34122 (KR); HAN, Chang Min, Daejeon 34122 (KR)
(74) Representative: Plasseraud IP
(86) International application number: PCT/KR2021/011211
(87) International publication number: WO 2022/050616

(57) **Abstract**

A secondary battery comprises: an electrode assembly; an electrode lead; a battery case provided with an accommodation portion for accommodating the electrode assembly and a sealing portion for sealing the accommodation portion; and a lead film. The sealing portion, through which the electrode lead is drawn, comprises a connection-sealing region connected to the accommodation portion, a front end-sealing region positioned on the opposite side from the connection-sealing region, and a reinforcement-sealing region provided between the connection-sealing region and the front end-sealing region. The reinforcement-sealing region comprises a compressed surface, which is provided in the sealing portion between the connection-sealing region and the front end-sealing region and recessed into the sealing portion, and raised surfaces, which are provided in the sealing portion between the connection-sealing region and the compressed surface and between the front end-sealing region and the compressed surface and each of which is formed thicker than the compressed surface. The battery case has a structure in which a resin layer, a metal layer, and an insulating layer are sequentially stacked in a direction from the inside to the outside. The resin layer of the raised surface is formed thicker than the resin layer of the compressed surface.

## Description

### CROSS-REFERENCE TO RELATED APPLICATION

The present application claims the benefit of the priority of Korean Patent Application No. 10-2020-0114123, filed on September 07, 2020, and Korean Patent Application No. 10-2021-0100240, filed on July 29, 2021, which are hereby incorporated by reference in their entirety.

### TECHNICAL FIELD

The present invention relates to a secondary battery and an apparatus and method for manufacturing the secondary battery, and particularly, to a secondary battery and an apparatus and method for manufacturing the secondary battery which has enhanced sealing force between an electrode lead and a sealing portion of a battery case.

### BACKGROUND ART

In general, secondary batteries refer to chargeable and dischargeable batteries, unlike primary batteries that are not chargeable. Such a secondary battery is being widely used in the high-tech electronic fields such as phones, laptop computers, and camcorders.

The secondary batteries are classified into a can-type secondary battery, in which an electrode assembly is stored in a metal can, and a pouch-type secondary battery, in which an electrode assembly is stored in a pouch. Also, the pouch-type secondary battery comprises an electrode assembly having an electrode tab, an electrode lead coupled to the electrode tab, and a battery case accommodating the electrode assembly in a state in which a front end of the electrode lead is drawn to the outside. Also, the battery case comprises an accommodation portion for accommodating the electrode assembly and a sealing portion formed along an edge surface of the accommodation portion.

Meanwhile, the secondary battery has been developed in a direction toward high capacity and high output, and accordingly, an amount of gas generated inside the secondary battery is significantly increasing.

However, a secondary battery according to the related art achieves the high capacity and high output, but does not achieve an enhanced sealing force of the battery case. Particularly, a sealing portion of a battery case, in which an electrode lead is positioned, has a lower sealing force than other regions of sealing portion. Accordingly, as the battery case is vented due the gas, an explosion or fire occurs.

Meanwhile, the entire sealing portion may be compressed in a mesh type so as to increase the sealing force for the sealing portion of the battery case. However, the sealing portion, which is compressed in the mesh type, has lower tensile strength and is thus easily delaminated or peeled off.

### DISCLOSURE OF THE INVENTION

### TECHNICAL PROBLEM

The present invention has been made to solve the above problems. An object of the present invention is to provide a secondary battery and an apparatus and method for manufacturing the secondary battery. In the secondary battery, a sealing portion of a battery case, in which an electrode lead is positioned, comprises a reinforcement-sealing region which is pattern-sealed in a stripe shape, and thus, a sealing force between the electrode lead and the sealing portion may be significantly enhanced. Accordingly, the sealing portion of the battery case, in which the electrode lead is positioned, may be prevented from being vented.

Also, another object of the present invention is to provide a secondary battery and an apparatus and method for manufacturing the secondary battery. In the secondary battery, a front end of a sealing portion of a battery case, in which an electrode lead is positioned, comprises a front end-sealing region, and thus, tensile strength at a front end of the sealing portion may be sufficiently secured. Accordingly, the sealing portion may be prevented from being delaminated or peeled off, and as a result, safety of the secondary battery may be improved.

### TECHNICAL SOLUTION

To achieve the object described above, a secondary battery comprises: an electrode assembly provided with an electrode tab; an electrode lead coupled to the electrode tab; a battery case provided with an accommodation portion configured to accommodate the electrode assembly in a state in which a front end of the electrode lead is drawn to the outside and a sealing portion configured to seal the accommodation portion; and a lead film which is provided on the electrode lead positioned in the sealing portion of the battery case, wherein the sealing portion, through which the electrode lead is drawn, comprises a connection-sealing region connected to the accommodation portion, a front end-sealing region positioned on the opposite side from the connection-sealing region, and a reinforcement-sealing region provided between the connection-sealing region and the front end-sealing region, wherein the reinforcement-sealing region comprises a compressed surface, which is provided in the sealing portion between the connection-sealing region and the front end-sealing region and recessed into the sealing portion, and raised surfaces, which are provided in the sealing portion between the connection-sealing region and the compressed surface and between the front end-sealing region and the compressed surface and each of which is formed thicker than the compressed surface, wherein the battery case has a structure in which a resin layer, a metal layer, and an insulating layer are sequentially stacked in a direction from the inside to the outside, wherein the resin layer of the raised surface is formed thicker than the resin layer of the compressed surface.

The resin layer of the raised surface may be formed thicker than the resin layer of the compressed surface as the raised surface is compressed less than the compressed surface when the reinforcement-sealing region is formed.

The reinforcement-sealing region may be formed only in a surface of the sealing portion corresponding to a surface of the electrode lead.

The compressed surface and the raised surface may be elongated in a width direction of the electrode lead, and lengths of the compressed surface and the raised surface may be equal to or less than the entire width of the electrode lead, and ends on both sides of the compressed surface and the raised surface may be formed as a straight line portion having the same direction as a longitudinal direction of the electrode lead.

A width of the compressed surface is 3 mm to 5 mm.

A height from a bottom surface of the compressed surface to a top surface of the raised surface may be 30 um to 50 µm.

A thickness of the front end-sealing region positioned in the electrode lead may be formed greater than a thickness of the compressed surface of the reinforcement-sealing region.

Two or more compressed surfaces may be provided in a longitudinal direction of the electrode lead, and raised surfaces may be further provided between the two or more compressed surfaces.

The reinforcement-sealing region may be formed in each of an upper surface and a lower surface of the sealing portion, and the compressed surface and the raised surface of the reinforcement-sealing region, which are formed in each of the upper surface and the lower surface of the sealing portion, may be formed symmetrically or asymmetrically.

Meanwhile, a secondary battery manufacturing apparatus of the present invention is to manufacture a secondary battery which comprises an electrode assembly provided with an electrode tab, an electrode lead coupled to the electrode tab, a battery case provided with an accommodation portion configured to accommodate the electrode assembly in a state in which a front end of the electrode lead is drawn to the outside and a sealing portion configured to seal the accommodation portion, and a lead film which is provided on the electrode lead positioned in the sealing portion of the battery case, wherein the secondary battery manufacturing apparatus comprises a pressing member configured to compress and seal the sealing portion in which the electrode lead is positioned, wherein the pressing member comprises a connection-sealing part configured to compress surfaces of the sealing portion, which are connected to the accommodation portion, so as to form a connection-sealing region, a front end-sealing part configured to compress surfaces of the sealing portion, which are positioned on the opposite side from the connection-sealing region, so as to form a front end-sealing region, and a reinforcement-sealing part configured to compress surfaces of the sealing portion, which are positioned between the connection-sealing part and the front end-sealing part, so as to form a reinforcement-sealing region made of a compressed surface and a raised surface, wherein the reinforcement-sealing part comprises a compression protrusion, which compresses the sealing portion between the connection-sealing region and the front end-sealing region and forms the compressed surface recessed into the sealing portion, and a compression groove, which compresses the sealing portion between the compression protrusion and the connection-sealing part and between the compression protrusion and the front end-sealing part so as to be recessed less than the compressed surface and forms the raised surface thicker than the compressed surface, wherein as the front end-sealing part protrudes less than the compression protrusion when viewed in the battery case, a thickness of the front end-sealing region is formed greater than a thickness of the compressed surface of the reinforcement-sealing region.

The pressing member may compress and seal only a surface of the sealing portion corresponding to a surface of the electrode lead.

The compression protrusion and the compression groove may be elongated in a width direction of the electrode lead, and lengths of the compression protrusion and the compression groove may be equal to or less than the entire width of the electrode lead, and ends on both sides of the compression protrusion and the compression groove may be formed as a straight line portion having the same direction as a longitudinal direction of the electrode lead.

Meanwhile, a secondary battery manufacturing method of the present invention comprises: preparing an electrode assembly provided with an electrode tab; coupling an electrode lead to the electrode tab of the electrode assembly; accommodating the electrode assembly in an accommodation portion of a battery case in a state in which a front end of the electrode lead is drawn to the outside, and attaching a lead film to the electrode lead positioned in a sealing portion of the battery case; and compressing and sealing the sealing portion of the battery case through which the electrode lead is drawn, wherein the sealing comprises: a connection-sealing process of compressing surfaces of the sealing portion, which are connected to the accommodation portion, so as to form a connection-sealing region; a front end-sealing process of compressing surfaces of the sealing portion, which are positioned on the opposite side from the connection-sealing region, so as to form a front end-sealing region; and a reinforcement-sealing process of compressing surfaces of the sealing portion, which are positioned between the connection-sealing region and the front end-sealing region, so as to form a reinforcement-sealing region made of a compressed surface and a raised surface, wherein the reinforcement-sealing process comprises compressing the sealing portion between the connection-sealing region and the front end-sealing region so as to be recessed and forming the compressed surface, and compressing the sealing portion between the compressed surface and the connection-sealing region and between the compressed surface and the front end-sealing region so as to be recessed less than the compressed surface and forming the raised surface thicker than the compressed surface, wherein in the accommodating, the battery case has a structure in which a resin layer, a metal layer, and an insulating layer are sequentially stacked in a direction from the inside to the outside, and in the sealing, the resin layer of the raised surface has a thickness greater than that of the resin layer of the compressed surface.

The reinforcement-sealing region may be formed only in a surface of the sealing portion corresponding to a surface of the electrode lead.

The compressed surface and the raised surface may be elongated in a width direction of the electrode lead, and lengths of the compressed surface and the raised surface are equal to or less than the entire width of the electrode lead, and ends on both sides of the compressed surface and the raised surface are formed as a straight line portion having the same direction as a longitudinal direction of the electrode lead.

### ADVANTAGEOUS EFFECTS

The secondary battery of the present invention comprises the battery case provided with the accommodation portion and the sealing portion. The sealing portion comprises the connection-sealing region, the front end-sealing region, and the reinforcement-sealing region. The reinforcement-sealing region comprises the compressed surface and the raised surface. With this feature, the sealing force of the sealing portion of the battery case, in which the electrode lead is positioned, may significantly increase, and accordingly, it is possible to significantly prevent venting from occurring.

Particularly, in the present application, the front end-sealing region is provided thicker than the compressed surface of the reinforcement-sealing region. With this feature, the tensile strength at the front end of the sealing portion may be sufficiently secured, and accordingly, it is possible to prevent the front end of the sealing portion from being delaminated or peeled off.

Also, in the secondary battery of the present invention, the battery case has the structure in which the resin layer, the metal layer, and the insulating layer are sequentially stacked. The resin layer of the raised surface is formed thicker than the resin layer of the compressed surface. With this feature, internal pressure of the raised surface of the battery case may increase, and accordingly, it is possible to effectively prevent a gas from venting through a start point of the sealing portion connected to the accommodation portion. Described more accurately, it is possible to prevent the gas from venting through the raised surface of the reinforcement-sealing region connected to the connection-sealing region.

### BRIEF DESCRIPTION OF THE DRAWINGS

FIG. 1 is a perspective view illustrating a secondary battery according to a first embodiment of the present invention.
FIG. 2 is a plan view illustrating the secondary battery according to the first embodiment of the present invention.
FIG. 3 is a cross-sectional view taken along line A-A of FIG. 2.
FIG. 4 is an enlarged view of region B of FIG. 3.
FIG. 5 is a cross-sectional picture showing a vent test result of the secondary battery according to the first embodiment of the present invention.
FIG. 6 is a side view illustrating a secondary battery manufacturing apparatus according to a second embodiment of the present invention.
FIG. 7 is a bottom view illustrating a pressing member of the secondary battery manufacturing apparatus according to the second embodiment of the present invention.
FIG. 8 is a cross-sectional view taken along line C-C of FIG. 7.
FIG. 9 is a cross-sectional view illustrating a state in which a sealing portion of a secondary battery is compressed by the pressing member of the secondary battery manufacturing apparatus according to the second embodiment of the present invention.
FIG. 10 is a flowchart showing the secondary battery manufacturing method according to the second embodiment of the present invention.

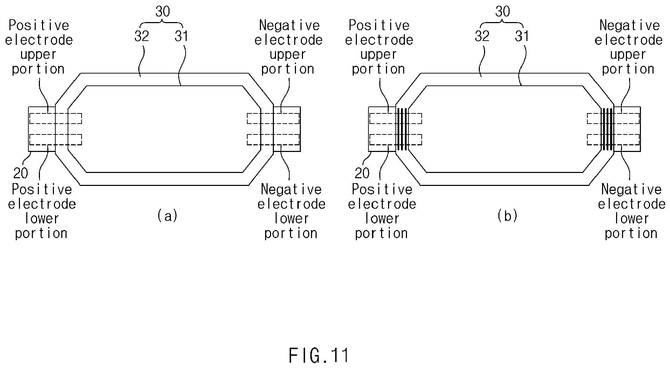

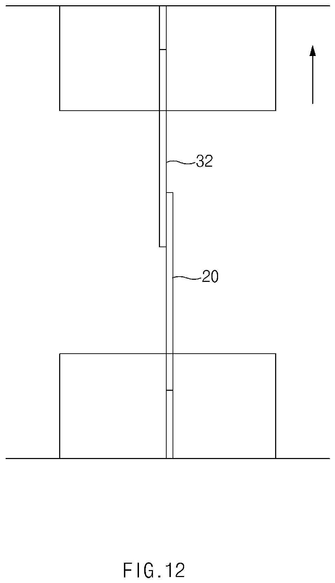

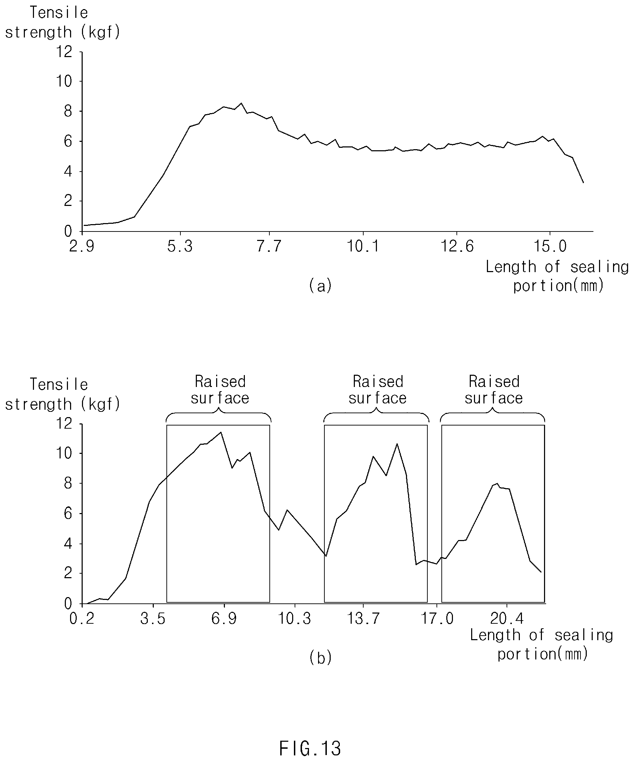

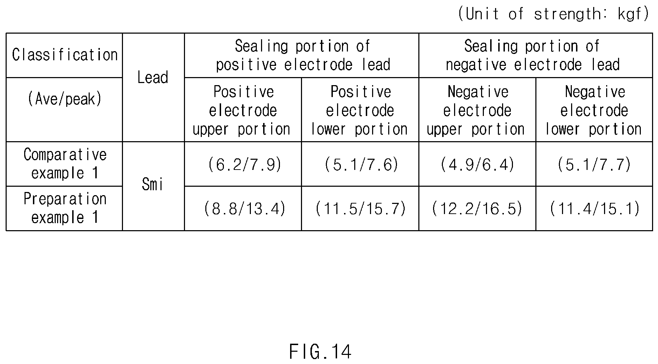

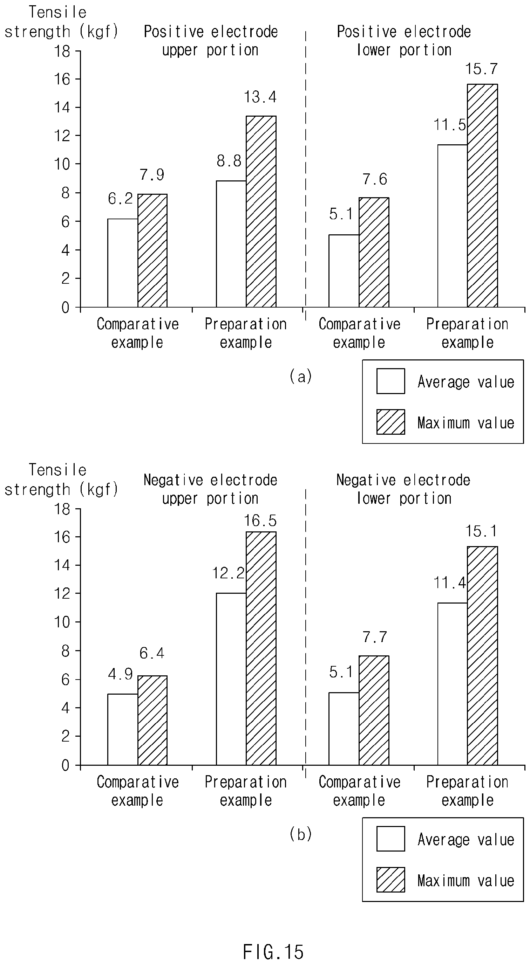

FIGS. 11 to 15 show test examples in which tensile strength of a sealing portion of the present invention is measured. FIG. 11(a) is a view illustrating a secondary battery in a comparative example, and FIG. 11(b) is a view illustrating a secondary battery of a preparation example. FIG. 12 is a view illustrating a measurement device that measures tensile strength. FIG. 13(a) is a graph in which tensile strength of the comparative example is measured, and FIG. 13(b) is a graph in which tensile strength of the preparation example is measured. FIG. 14 is a table representing the tensile strength of the comparative example and the preparation example as numerical values, and FIG. 15 is a bar graph showing tensile strength of the comparative example and the preparation example.
FIGS. 16 to 18 show a test example in which a sealing state of a sealing portion of the present invention is measured, and FIG. 16 is a cross-sectional picture in which a sealing portion provided in a secondary battery of the present invention is captured. FIG. 17 is a table showing, as numerical values, sealing thicknesses before and after a sealing portion provided in a secondary battery of the present invention is sealed. FIG. 18(a) shows thicknesses of a compressed surface shown in FIG. 16, and FIG. 18(b) shows thicknesses of a raised surface shown in FIG. 16.
FIG. 19 shows test results in which a vent state of a sealing portion of the present invention is tested.

### MODE FOR CARRYING OUT THE INVENTION

Hereinafter, embodiments of the present invention will be described in detail with reference to the accompanying drawings so as to be easily carried out by a person skilled in the art to which the present invention pertains. However, the present invention may be embodied in various different forms, and is not limited to the embodiments described herein. Also, in the drawings, parts irrelevant to the description will be omitted to clearly describe the present invention, and similar elements will be designated by similar reference numerals throughout the specification.

### [Secondary battery according to a first embodiment of the present invention]

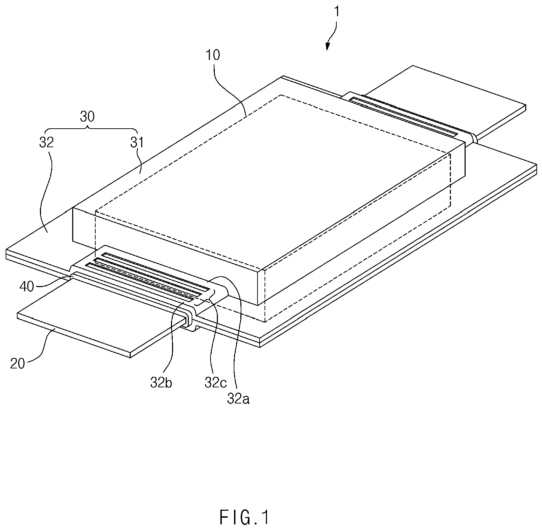

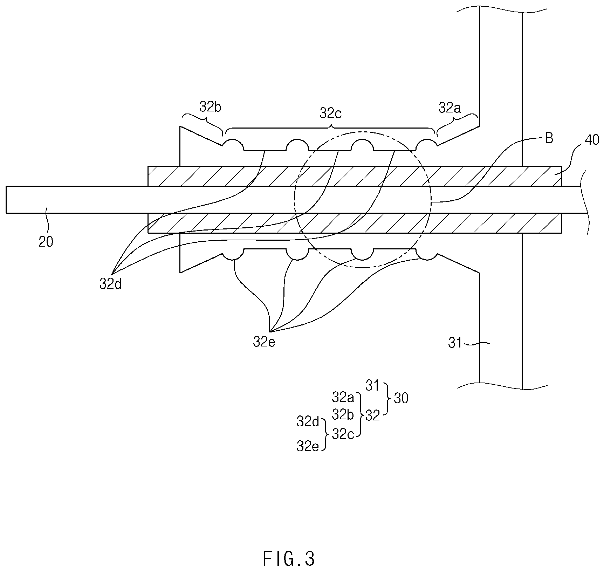

As illustrated in FIGS. 1 to 5, a secondary battery 1 according to the first embodiment of the present invention comprises an electrode assembly 10 provided with an electrode tab 11, an electrode lead 20 coupled to the electrode tab 11, a battery case 30 accommodating the electrode assembly 10 in a state in which a front end of the electrode lead 20 is drawn to the outside, and a lead film 40 attached to the electrode lead 20 positioned in a sealing portion of the battery case 30.

The electrode assembly 10 has a structure in which a plurality of electrodes are alternately stacked with a separator interposed therebetween, and the electrode tab 11 is provided in the plurality of electrodes. Here, the plurality of electrodes may be a positive electrode and a negative electrode, and the electrode tab 11 may be a positive electrode tab provided in the positive electrode and a negative electrode tab provided in the negative electrode.

The electrode lead 20 is coupled to the electrode tab, and comprises a positive electrode lead coupled to the positive electrode tab and a negative electrode lead coupled to the negative electrode tab.

The battery case 30 comprises an accommodation portion 31, which accommodates the electrode assembly 10, and a sealing portion 32, which is formed along an edge of the accommodation portion 31 and seals the accommodation portion 31.

Here, the battery case 30 comprises an upper pouch and a lower pouch which are mutually coupled to each other, and each of the upper and lower pouches may have a structure in which the resin layer 30a, the metal layer 30b, and the insulating layer 30c are sequentially stacked from the inside, in which the electrode assembly 10 is positioned, toward the outside.

Meanwhile, the stack structures of the upper and lower pouches are illustrated as one embodiment, but various stack structures in a form comprising the resin layer 30a, the metal layer 30b, and the insulating layer 30c are possible according to pouch structures to be applied. As one example, a resin layer, an adhesive layer, a metal layer, an adhesive layer, and an insulating layer may be formed as a stack structure.

The lead film 40 is provided in a form surrounding the electrode lead 20 positioned in the sealing portion 32 and increases a coupling force and a seal force between the sealing portion 32 and the electrode lead 20.

Meanwhile, when gas pressure increases inside the battery case 30, the secondary battery 1 is likely to be exploded or ignited as the sealing portion 32 of the battery case 30 is vented. Particularly, a sealing portion 32, in which the electrode lead 20 is positioned, in the sealing portion 32 of the battery case 30 has a lower sealing force than a sealing portion in which the electrode lead is not present, and is thus likely to be vented earlier due to the gas pressure.

In order to solve the above limitation, the secondary battery 1 according to the first embodiment of the present invention has a structure enhancing the sealing force of the sealing portion of the battery case. Particularly, the secondary battery 1 according to the first embodiment of the present invention has a structure significantly enhancing the sealing force of the sealing portion 32 positioned in the electrode lead 20, and accordingly, it is possible to prevent the sealing portion of the battery case, in which the electrode lead is positioned, from being vented earlier by the gas pressure.

That is, in the secondary battery 1 according to the first embodiment of the present invention, the sealing portion 32, through which the electrode lead is drawn, comprises a connection-sealing region 32a connected to the accommodation portion 31, a front end-sealing region 32b positioned at a front end of the sealing portion on the opposite side from the connection-sealing region 32a, and a reinforcement-sealing region 32c provided between the connection-sealing region 32a and the front end-sealing region 32b.

The connection-sealing region 32a is formed as the surface of the sealing portion 32 connected to the accommodation portion 31 is compressed.

The front end-sealing region 32b is formed as the surface at the front end of the sealing portion on the opposite side from the connection-sealing region 32a is compressed.

The reinforcement-sealing region 32c is formed as the surface of the sealing portion between the connection-sealing region 32a and the front end-sealing region 32b is compressed.

Here, the reinforcement-sealing region 32c comprises a compressed surface 32d, which is provided in the sealing portion 32 between the connection-sealing region 32a and the front end-sealing region 32b and recessed into the sealing portion 32, and raised surfaces 32e, which are provided in the sealing portion 32 between the connection-sealing region 32a and the compressed surface 32d and between the front end-sealing region 32b and the compressed surface 32d and each of which is formed thicker than the compressed surface 32d and protrudes outward from the compressed surface.

That is, the reinforcement-sealing region 32c comprises the compressed surface 32d, which is formed as the sealing portion 32 between the connection-sealing region 32a and the front end-sealing region 32b is compressed to be recessed, and the raised surface 32e, which is formed thicker than the compressed surface 32d as being compressed to be recessed less than the compressed surface 32d when the reinforcement-sealing region is formed.

Here, the thickness of the front end-sealing region 32b may be formed greater than the thickness of the compressed surface 32d of the reinforcement-sealing region 32c. Preferably, the thickness of the front end-sealing region 32b, in which the electrode lead is positioned, is formed greater than the thickness of the compressed surface 32d of the reinforcement-sealing region 32c.

That is, the front end-sealing region 32b is positioned at the front end of the sealing portion, and may have high degree of crystallinity and significantly high sealing force when compressed to the same thickness as the compressed surface 32d. However, tensile strength is significantly reduced. Accordingly, a defect may occur as the front end-sealing region 32b is easily delaminated or peeled off. In order to prevent this, the front end-sealing region 32b is compressed to be recessed in the thickness direction of the sealing portion, and is formed to have a thickness greater than the thickness of the compressed surface 32d. Accordingly, the degree of crystallinity may be lower than that of the compressed surface, but the sealing force may be significantly increased. Thus, it is possible to prevent the front end-sealing region 32b from being delaminated or peeled off.

Particularly, a defect is highly likely to occur that the front end of the sealing portion, in which the electrode lead is positioned, is delaminated, peeled off, or the like. Accordingly, the front end-sealing region 32b is formed only at the front end of the sealing portion in which the electrode lead is positioned, and the thickness of the front end-sealing region 32b may be formed greater than the thickness of the compressed surface of the reinforcement-sealing region.

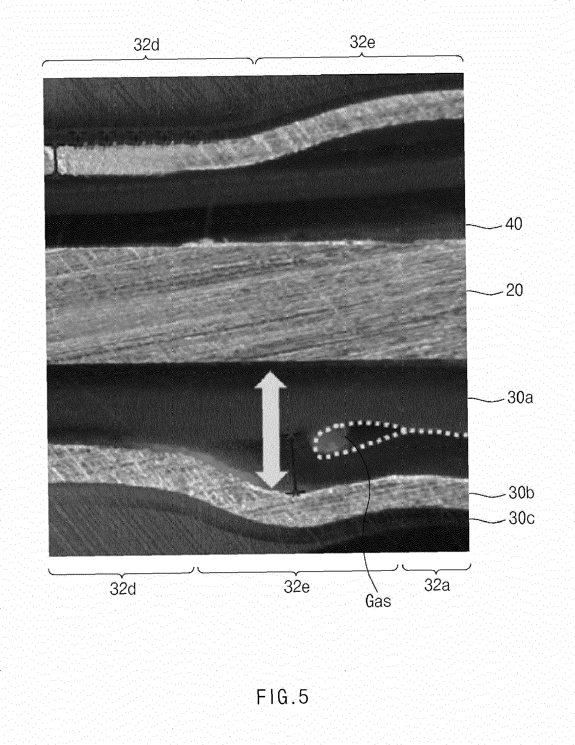

Meanwhile, the resin layer 30a positioned in the raised surface 32e may have a greater thickness than the resin layer 30a positioned in the compressed surface 32d. That is, the raised surface 32e is compressed to be recessed less than the compressed surface 32d when the reinforcement-sealing region 32c is formed, and here, the resin layer 30a of the raised surface 32e has a greater thickness as being compressed less than the resin layer 30a of the compressed surface 32d. Accordingly, the resin layer of the raised surface is formed thicker than the resin layer of the compressed surface, and thus may form higher resistance force than the resin layer of the compressed surface. As a result, a gas generated inside the battery case is blocked and stopped by the resin layer 30a positioned in the raised surface 32e of the reinforcement-sealing region connected to the connection-sealing region 32a. Consequently, it is possible to effectively prevent venting from occurring (see a cross-sectional picture captured in FIG. 5) .

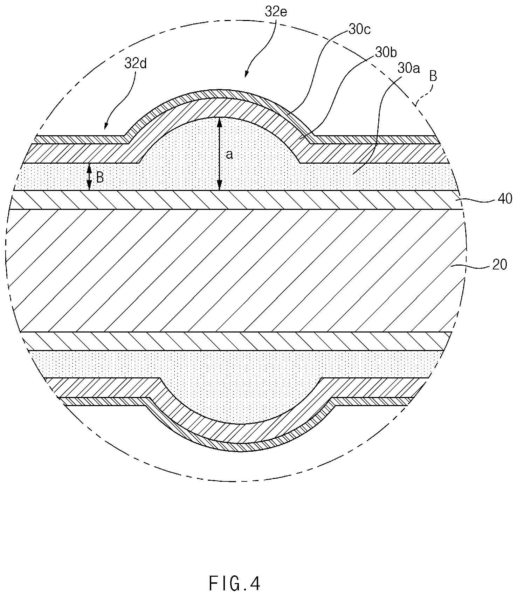

To summarize, referring to FIG. 4, a thickness a of the resin layer of the raised surface is formed greater than a thickness B of the resin layer of the compressed surface.

Meanwhile, the metal layer of the raised surface 32e and the metal layer of the compressed surface 32d or the insulating layer of the raised surface 32e and the insulating layer of the compressed surface 32d may have equivalent thicknesses. Accordingly, the insulating properties and outer shape of the entire sealing portion positioned in the electrode lead may be prevented from changing.

The sealing portion 32 having the above structure comprises the connection-sealing region 32a, the front end-sealing region 32b, and the reinforcement-sealing region 32c. Thus, the sealing force of the sealing portion through which the electrode lead is drawn may be increased, and as a result, it is possible to significantly prevent the sealing portion from being vented.

Meanwhile, the reinforcement-sealing region 32c may be formed in the entire sealing portion 32 of the battery case 30 through which the electrode lead 20 is drawn, or may be formed only in the surface of the sealing portion 32 corresponding to the surface of the electrode lead 20 so as to increase efficiency of works and processes.

That is, a sealing portion in which the electrode lead is not positioned may secure a stable sealing force because the sealing portion is compressed in a state in which the upper and lower pouches are in close contact with each other. However, for the sealing portion in which the electrode lead is positioned, there is a limitation in securing stable sealing force because the lead film and the upper pouch, the lead film and the lower pouch are sealed.

Accordingly, the reinforcement-sealing region 32c is formed only in the surface of the sealing portion 32 in which the electrode lead 20 is positioned, and as a result, the sealing force of the surface of the sealing portion in which the electrode lead is positioned may be effectively enhanced. That is, the reinforcement-sealing region may be formed within the surface of the sealing portion positioned on the same vertical line as the surface of the electrode lead.

Meanwhile, the compressed surface 32d and the raised surface 32e may be elongated in the width direction of the electrode lead. Particularly, the lengths of the compressed surface 32d and the raised surface 32e may be equal to or less than the entire width of the electrode lead. Accordingly, the uniform sealing force is provided in the width direction of the electrode lead, and as a result, it is possible to significantly prevent venting from occurring.

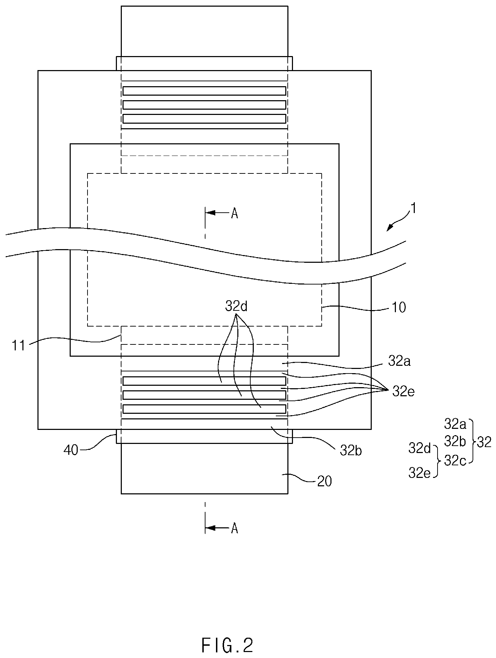

Particularly, ends on both sides of the compressed surface 32d and the raised surface 32e are formed as a straight line portion having the same direction as the longitudinal direction of the electrode lead. That is, referring to FIG. 2, the compressed surface 32d and the raised surface 32e have a rectangular shape in which the ends on both sides are straight lines. Accordingly, uniform sealing force is provided even to the ends on both sides of the compressed surface 32d and the raised surface 32e, and as a result, the sealing force of the sealing portion positioned in the electrode lead may be increased.

Meanwhile, the connection-sealing region 32a or the front end-sealing region 32b may be formed as a curved surface or an inclined surface. That is, the connection-sealing region 32a may be formed as a curved surface or an inclined surface, a thickness of which increases gradually from one end connected to the raised surface toward the other end on the opposite side thereof. Accordingly, high degree of crystallinity may be maintained at the one end of the connection-sealing region 32a, and the high tensile strength may be maintained at the other end. As a result, it is possible to prevent the connection-sealing region 32a from being vented and delaminated. Also, the front end-sealing region 32b may be formed as a curved surface or an inclined surface, a thickness of which increases gradually from one end connected to the raised surface toward the other end. Accordingly, high degree of crystallinity may be maintained at the one end of the front end-sealing region 32b, and the high tensile strength may be maintained at the other end. As a result, it is possible to significantly prevent the front end-sealing region 32b from being vented and delaminated.

Meanwhile, two or more compressed surfaces 32d may be provided in the longitudinal direction of the electrode lead, and raised surfaces 32e may be further provided between the two or more compressed surfaces 32d. Accordingly, the venting of gas may be blocked in multiple stages, and as a result, it is possible to significantly prevent venting from occurring.

Meanwhile, the widths of the two compressed surfaces provided in the longitudinal direction of the electrode lead may be different from each other. That is, the compressed surface positioned in the accommodation portion in which high internal pressure is generated may have a large width, and the compressed surface positioned at the front end of the sealing portion may have a small width.

Meanwhile, the depths of two or more compressed surfaces 32d may be equal to each other or different from each other. That is, when the two or more compressed surfaces 32d are formed to have the same depths, the sealing force may be significantly increased because sealing forces of the two or more compressed surfaces are equal to each other. Also, when the two or more compressed surfaces 32d are formed to have different depths, one or more of the compressed surfaces may increase sealing force, and the others of the compressed surfaces may increase tensile strength. For example, the compressed surface adjacent to the front end-sealing region 32b may have the small depth to increase the tensile strength, and the compressed surface adjacent to the connection-sealing region 32a may have the large depth to increase sealing strength.

Meanwhile, the two or more raised surfaces 32e formed in the reinforcement-sealing region 32c may have heights equal to or different from each other. That is, the two or more raised surfaces formed in the reinforcement-sealing region 32c may have the same height through a precise forming process, or may have different heights due to a difference in compression force.

Meanwhile, the resin layer 30a may have a lower melting point than the metal layer and the insulating layer. That is, when the sealing portion is compressed, sealing portions of the upper and lower pouches are thermally fused by melting only the resin layer 30a, and at the same time, reinforcement-sealing regions may be formed in the sealing portions.

Meanwhile, the compressed surface 32d has a width of 3 mm to 5 mm. Preferably, the compressed surface 32d has a width of 4 mm. That is, it is difficult to secure the sealing strength when the width of the compressed surface 32d is 2 mm or less. Also, when the width is 6 mm or more, the area of the sealing portion significantly increases, and energy density may deteriorate. Accordingly, the plurality of compressed surfaces 32d have a width of 3 to 5 mm, and thus, it is possible to prevent the sealing strength and energy density from deteriorating.

Meanwhile, the depth of the compressed surface 32d (the height from the bottom surface of the compressed surface to the uppermost surface of the raised surface) is formed to 30 um to 50 um. Preferably, the compressed surface 32d is formed to have a depth of 40 um. Accordingly, the raised surface 32e having the height of 40 um may be formed between the compressed surfaces 32d. That is, it is difficult to sufficiently secure the raised surface when the depth of the compressed surface 32d is 30 um or less. Also, when 50 um or more, it is possible to sufficiently secure the raised surface, but the thickness of the resin layer positioned in the compressed surface is significantly reduced.

Meanwhile, the reinforcement-sealing region 32c may be formed in each of the upper surface and lower surface of the sealing portion 32. Here, reinforcement-sealing regions 32c formed in the respective upper and lower surfaces of the sealing portion 32 are formed asymmetrically. That is, the reinforcement-sealing regions 32c may be formed asymmetrically because there may be differences in heights and shapes of the raised surfaces on the upper surface and the lower surface of the sealing portion 32. Accordingly, when the reinforcement-sealing regions are formed asymmetrically on the upper surface and the lower surface of the sealing portion, thickness deviation of the sealing portion may be minimized, and as a result, it is possible to prevent strength of the sealing portion from being significantly reduced.

Meanwhile, the reinforcement-sealing regions 32c may be formed symmetrically in the respective upper surface and lower surface of the sealing portion 32.

Thus, in the secondary battery 1 according to the first embodiment of the present invention, the sealing portion 32 of the battery case 30 comprises the reinforcement-sealing region in which the compressed surface 32d and the raised surface 32e are formed. Thus, the sealing force of the battery case 30 may significantly increase, and it is possible to significantly prevent venting from occurring. Particularly, it is possible to effectively prevent the gas from venting in the raised surface that is a start point of the reinforcement-sealing region connected to the connection-sealing region. In addition, the thickness of the front end-sealing region is formed greater than the thickness of the compressed surface of the reinforcement-sealing region, and thus, it is possible to prevent tensile strength of the front end-sealing region of the sealing portion from being reduced. As a result, it is possible to prevent the battery case from being separated.

Meanwhile, the sealing portion of the secondary battery 1 according to the first embodiment of the present invention may be sealed by using a secondary battery manufacturing apparatus. In other words, the secondary battery manufacturing apparatus according to a second embodiment of the present invention may seal a sealing portion of a battery case, and particularly, seal a sealing portion of a battery case in which an electrode lead is drawn.

Hereinafter, the secondary battery manufacturing apparatus according to the second embodiment of the present invention will be described in detail with reference to the accompanying drawings.

### [Secondary battery manufacturing apparatus according to the second embodiment of the present invention]

A secondary battery manufacturing apparatus 100 according to the second embodiment of the present invention is to seal a sealing portion of a battery case through which an electrode lead is drawn.

Meanwhile, a secondary battery 1 comprises an electrode assembly 10 provided with an electrode tab 11, an electrode lead 20 coupled to the electrode tab 11, a battery case 30 which is provided with an accommodation portion 31 accommodating the electrode assembly 10 in a state in which a front end of the electrode lead 20 is drawn to the outside and a sealing portion 32 sealing the accommodation portion 31, and a lead film 40 which is provided on the electrode lead 20 positioned in the sealing portion 32 of the battery case 30.

Meanwhile, in the secondary battery manufacturing apparatus 100 according to the second embodiment of the present invention, sealing of the sealing portion of the battery case through which the electrode lead is drawn is described as one embodiment, but this description may be applied, in the same manner, to a sealing portion of a battery case in which an electrode lead is not present.

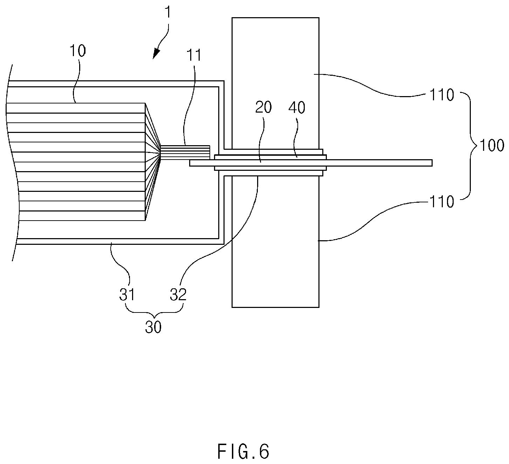

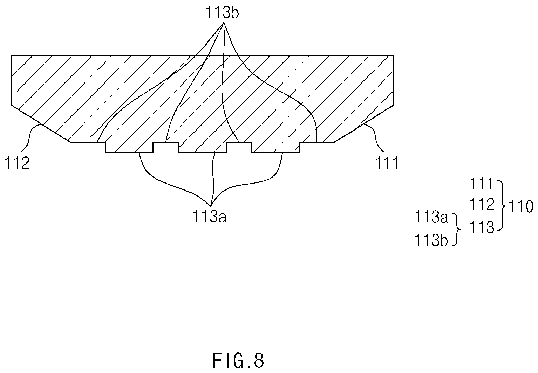

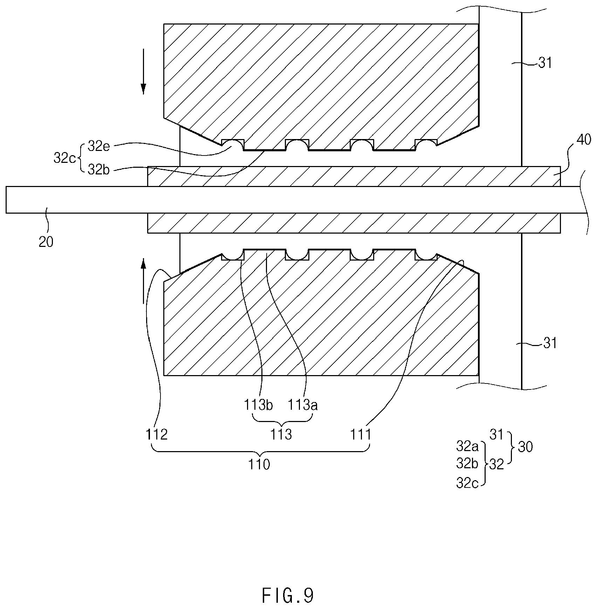

That is, as illustrated in FIGS. 6 to 9, the secondary battery manufacturing apparatus 100 according to the second embodiment of the present invention comprises a pressing member 110 which compresses the sealing portion 32 of the battery case 30, through which the electrode lead is drawn, and seals the sealing portion 32.

The pressing member 110 comprises a connection-sealing part 111 compressing surfaces of the sealing portion 32, which are connected to the accommodation portion 31, so as to form a connection-sealing region 32a, a front end-sealing part 112 compressing surfaces of front ends of the sealing portion 32, which are positioned on the opposite side from the connection-sealing region 32a, so as to form a front end-sealing region 32b, and a reinforcement-sealing part 113 compressing surfaces of the sealing portion 32, which are positioned between the connection-sealing part 111 and the front end-sealing part 112, so as to form a reinforcement-sealing region 32c made of a compressed surface 32d and a raised surface 32e.

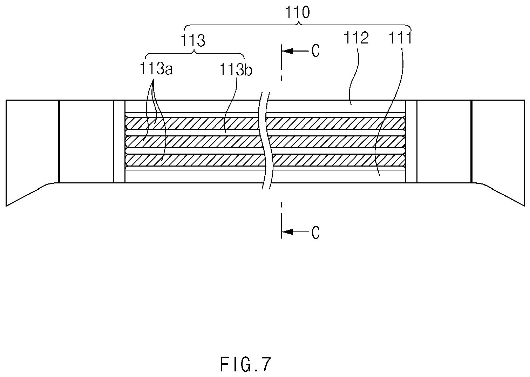

Here, in the reinforcement-sealing part 113, a groove is made by cutting the surface of the reinforcement-sealing part 113 in the longitudinal direction (the left and right directions when viewed in FIG. 7), and the groove is made so that a plurality of grooves are formed in the width direction of the reinforcement-sealing part 113 (the up-down direction when viewed in FIG. 7). Accordingly, the reinforcement-sealing part 113 has a cross-section in which grooves and protrusions are formed alternately in the width direction of the sealing portion. Meanwhile, a protrusion serves as a compression protrusion for forming a compressed surface in the sealing portion, and a groove serves as a compression groove for forming a raised surface in the sealing portion.

To summarize, the reinforcement-sealing part 113 comprises a compression protrusion 113a, which compresses the sealing portion between the connection-sealing region 32a and the front end-sealing region 32b and forms the compressed surface 32d recessed into the sealing portion, and a compression groove 113b, which compresses the sealing portion between the compression protrusion 113a and the connection-sealing part 111 and between the compression protrusion 113a and the front end-sealing part 112 so as to be recessed less than the compressed surface 32d and forms the raised surface 32e thicker than the compressed surface 32d.

The pressing member 110 having the above structure comprises the connection-sealing part 111, the front end-sealing part 112, and the reinforcement-sealing part 113, and thus may form the connection-sealing region 32a, the front end-sealing region 32b, and the reinforcement-sealing region 32c in the sealing portion 32 of the battery case 30 through which the electrode lead is drawn.

Here, the pressing member 110 presses only the surface of the sealing portion 32 corresponding to the surface of the electrode lead 20, and accordingly, the connection-sealing region 32a, the front end-sealing region 32, and the reinforcement-sealing region 32c may be formed only in the surface of the sealing portion 32 in which the electrode lead 20 is positioned.

Particularly, the front end-sealing part 112 protrudes less than the compression protrusion 113a when viewed in the battery case 30, and accordingly, the thickness of the front end-sealing region 32b may be formed greater than the thickness of the compressed surface 32d of the reinforcement-sealing region 32c. This allows the front end-sealing region 32b to secure sufficient tensile strength, and thus, it is possible to prevent the front end-sealing region from being delaminated or peeled off.

Meanwhile, a pair of pressing members 110 may be provided to respectively press the top surface and the bottom surface of the sealing portion 32 in which the electrode lead 20 is positioned. That is, the pair of pressing members 110 are located respectively on the top surface and the bottom surface of the sealing portion 32 in which the electrode lead 20 is positioned, and then move in directions corresponding to each other. Thus, the connection-sealing part 111, the front end-sealing part 112, and the reinforcement-sealing part 113 of the pressing member 110 respectively form the connection-sealing region 32a, the front end-sealing region 32b, and the reinforcement-sealing region 32c in the sealing portion 32 while pressing the sealing portion 32 of the battery case 30. Particularly, the reinforcement-sealing part 113 compresses a portion of the reinforcement-sealing region 32c through the compression protrusion 113a so as to be further recessed in the thickness direction of the sealing portion 32, thereby forming the compressed surface 32d. The remainder of the reinforcement-sealing region 32c is compressed less than the compression protrusion 113a through the compression groove 113b, thereby forming the raised surface 32e.

Meanwhile, the compression protrusion and the compression groove are elongated in a width direction of the electrode lead, and lengths of the compression protrusion and the compression groove are equal to or less than the entire width of the electrode lead. Accordingly, the compressed surface and the raised surface, which are elongated in the width direction of the electrode lead, may be formed on the surface of the sealing portion in which the electrode lead is positioned.

Also, ends on both sides of the compression protrusion and the compression groove are formed as a straight line portion having the same direction as a longitudinal direction of the electrode lead. Accordingly, the compressed surface and the raised surface having a rectangular shape may be formed, and as a result, the sealing force of the sealing portion may increase.

Meanwhile, two or more compression protrusions 113a may be provided in the width direction of the sealing portion 32, and compression grooves 113b may be further provided between the two or more compression protrusions 113a. Accordingly, two or more compressed surfaces 32d and two or more raised surfaces 32e may be formed in the reinforcement-sealing region 32c, and as a result, the sealing force of the sealing portion may significantly increase.

Meanwhile, the two or more compression protrusions may have different widths. That is, the compression protrusion adjacent to the accommodation portion may be formed to have a large width, and the compression protrusion positioned at the front end of the sealing portion may be formed to have a small width.

Meanwhile, the connection-sealing part 111 connected to the compression groove 113b may be formed as a curved surface or an inclined surface, a height of which increases gradually from one end toward the other end. Accordingly, the connection-sealing part 111 may form the connection-sealing region having the curved surface or the inclined surface in the sealing portion. Also, the front end-sealing part 112 connected to the compression groove 113b may be formed as a curved surface or an inclined surface, a height of which increases gradually from one end toward the other end. Accordingly, the front end-sealing part 112 may form the front end-sealing region having the curved surface or the inclined surface in the sealing portion.

Meanwhile, the compression protrusion 113a formed in the pressing member 110 has a width of 3 to 5 mm, preferably, has a width of 4 mm. Accordingly, the compressed surface 32d having 3 to 5 mm, preferably, having 4 mm may be formed in the reinforcement-sealing region of the sealing portion.

Meanwhile, the depth from the front end of the compression protrusion to the bottom surface of the compression groove is formed to 30 um to 50 um. Preferably, the depth from the front end of the compression protrusion to the bottom surface of the compression groove is formed to 40 um. Accordingly, the raised surface 32e having the height of 40 um may be formed between the compressed surfaces 32d.

Thus, the secondary battery manufacturing apparatus 100 according to the second embodiment of the present invention comprises the pressing member 110 that seals only the surface of the sealing portion in which the electrode lead is positioned, and thus, the sealing force of the sealing portion in which the electrode lead is positioned may be significantly enhanced.

Hereinafter, a secondary battery manufacturing method according to the second embodiment of the present invention will be described in more detail.

### [Secondary battery manufacturing method according to the second embodiment of the present invention]

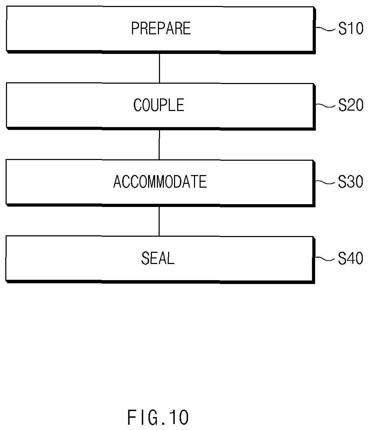

As illustrated in FIG. 10, the secondary battery manufacturing method according to the second embodiment of the present invention comprises a preparation process (S10), a coupling process (S20), an accommodation process (S30), and a sealing process (S40).

### Preparation process

In the preparation process (S10), an electrode assembly 10 provided with an electrode tab 11 is prepared. Here, the electrode assembly has a structure in which an electrode and a separator are alternately stacked, and the electrode tab 11 protrudes from one end of the electrode.

### Coupling process

In the coupling process (S20), one end of an electrode lead 20 is located to overlap a front end of the electrode tab 11 of the electrode assembly 10, and then, overlapping surfaces of the electrode tab 11 and the electrode lead 20 are welded and coupled.

### Accommodation process

In the accommodation process (S30), the electrode assembly 10 is accommodated in an accommodation portion 31 of the battery case 30 in a state in which the front end of the electrode lead 20 is drawn to the outside. Then, a lead film 40 is attached to the electrode lead 20 positioned in the sealing portion 32 of the battery case 30.

Meanwhile, the battery case 30 comprises an upper pouch and a lower pouch. Here, as an accommodation groove of the upper pouch and an accommodation groove of the lower pouch are connected to each other, the accommodation portion 31 is formed. As a sealing surface of the upper pouch and a sealing surface of the lower pouch are connected to each other, a sealing portion 32 is formed.

Also, each of the upper pouch and the lower pouch may have a structure in which a resin layer 30a, a metal layer 30b, and an insulating layer 30c are sequentially stacked from the inside toward the outside.

### Sealing process

The sealing process (S40) is to seal the sealing portion 32 in which the electrode lead is positioned, and comprises a connection-sealing process of compressing surfaces of the sealing portion 32, which are connected to the accommodation portion 31, so as to form a connection-sealing region 32a, a front end-sealing process of compressing surfaces of front ends of the sealing portion 32, which are positioned on the opposite side from the connection-sealing region 32a, so as to form a front end-sealing region 32b, and a reinforcement-sealing process of compressing surfaces of the sealing portion 32, which are between the connection-sealing region 32a and the front end-sealing region 32b, so as to form a reinforcement-sealing region 32c made of a compressed surface 32d and a raised surface 32e.

Here, the connection-sealing process, the front end-sealing process, and the reinforcement-sealing process are described individually for description, but are performed simultaneously when the sealing portion is sealed.

Also, in the sealing process (S40), a pressing member 110 of a secondary battery manufacturing apparatus 100 is used, and the pressing member 110 comprises a connection-sealing part 111, a front end-sealing part 112, and a reinforcement-sealing part 113.

That is, the secondary battery manufacturing apparatus 100 uses a pair of pressing members 110 to simultaneously compress and seal both surfaces of the sealing portion 32 of the battery case 30 through which the electrode lead is drawn.

Here, the reinforcement-sealing process comprises a compressed surface-forming work of forming a compressed surface 32d on the surface of the sealing portion 32 through a compression protrusion 113a of the reinforcement-sealing part 113 and a raised surface-forming work of forming a raised surface 32e on the surface of the sealing portion 32 through a compression groove 113b of the reinforcement-sealing part 113. In the compressed surface-forming work, at least two or more compressed surfaces are provided through the compression protrusion 113a in the width direction of the sealing portion 32 and formed by compressing the surface of the sealing portion so as to be recessed in the thickness direction of the sealing portion 32. In the raised surface-forming work, the raised surface 32e is formed through the compression groove 113b by compressing a region between the connection-sealing region and the compressed surface and a region between the front end-sealing region and the compressed surface. The raised surface 32e is compressed to be recessed less than the compressed surface. Accordingly, the raised surface 32e protrudes further than the compressed surface.

Meanwhile, the compressed surface-forming work and the raised surface-forming work are described individually for description, but are performed simultaneously when the sealing portion is sealed.

Meanwhile, in the sealing process, the thickness of the front end-sealing region 32b may be formed greater than the thickness of the compressed surface 32d of the reinforcement-sealing region 32c. Accordingly, it is possible to prevent the tensile strength of the front end-sealing region 32b from being reduced, and as a result, it is possible to prevent the front end-sealing region 32b from being delaminated or peeled off.

Meanwhile, in the sealing process, as the raised surface 32e is compressed less than the compressed surface 32d, the resin layer of the raised surface 32e may have a greater thickness than a resin layer of the compressed surface 32d. Accordingly, the resin layer 30a of the raised surface 32e has higher resistance force than the resin layer 30a of the compressed surface 32d, and as a result, the gas generated inside the battery case is stopped from a start point of the sealing portion in which the raised surface is formed. Consequently, it is possible to effectively prevent venting from occurring due to the gas.

Meanwhile, the metal layer and the insulating layer of the raised surface 32e have the thicknesses equal to or equivalent within a set range to the metal layer and the insulating layer of the compressed surface 32d.

Meanwhile, in the reinforcement-sealing process, the raised surface 32e, the connection-sealing region 32a, and the front end-sealing region 32b may have the same thickness.

Meanwhile, in the reinforcement-sealing process, two or more compressed surfaces are formed in the sealing portion between the connection-sealing region 32a and the front end-sealing region 32b in the width direction of the sealing portion, and raised surfaces may be further formed between the two or more compressed surfaces. Accordingly, the sealing force of the sealing portion may significantly increase.

Here, the reinforcement-sealing region is formed only in a surface of the sealing portion corresponding to a surface of the electrode lead. Particularly, the compressed surface and the raised surface are elongated in a width direction of the electrode lead, and lengths of the compressed surface and the raised surface are equal to or less than the entire width of the electrode lead. In addition, ends on both sides of the compressed surface and the raised surface are formed as a straight line portion having the same direction as the longitudinal direction of the electrode lead.

Thus, the secondary battery manufacturing method according to the second embodiment of the present invention may manufacture the complete secondary battery 1 having enhanced sealing force when the processes described above are completed.

### [Tensile strength test]

### Tensile strength test preparation

A plurality of secondary batteries are prepared, each of which comprises an electrode assembly, in which an electrode and a separator are alternately stacked, an electrode lead coupled to the electrode assembly, and a battery case for accommodating the electrode assembly. Here, the battery case is sealed at a temperature of 200°C, pressure of 0.2 MPa, a time of 0.2 s.

Among the secondary batteries prepared as described above, five secondary batteries, in which a connection-sealing region, a front end-sealing region, and a reinforcement-sealing region are formed in a sealing portion to enhance a sealing force, are classified as preparation examples. Also, five of the remaining secondary batteries are classified as comparative examples.

### Comparative example

In the comparative examples, as illustrated in FIG. 11(a), a portion, in which an electrode lead 20 and a sealing portion of a battery case 30 are connected, is cut from a secondary battery to prepare comparative test pieces. Here, in the comparative test pieces, referring to FIG. 11(a), the upper portion and the lower portion of a positive electrode lead and the sealing portion are cut respectively to prepare comparative materials of a positive electrode upper portion and a positive electrode lower portion.

### Preparation example

In the preparation examples, as illustrated in FIG. 11(b), the connection-sealing region, the front end-sealing region, and the reinforcement-sealing region are added. A portion, in which an electrode lead 20 and a sealing portion of a battery case 30 are connected, is cut to prepare preparation test pieces. Meanwhile, the reinforcement-sealing region comprises two compressed surfaces and three raised surfaces.

Here, in the preparation test pieces, the upper portion and the lower portion of a positive electrode lead and the sealing portion are cut respectively to prepare preparation materials of a positive electrode upper portion and a positive electrode lower portion, and the upper portion and the lower portion of a negative electrode lead and the sealing portion are cut respectively to prepare preparation materials of a negative electrode upper portion and a negative electrode lower portion.

Meanwhile, the positive electrode upper portion and the positive electrode lower portion, and the negative electrode upper portion and the negative electrode lower portion are descried with respect to the sealing portion illustrated in FIG. 11.

### Tensile strength measurement

The preparation test pieces and the comparative test pieces prepared as described above are pulled by a tensile strength tester under the same conditions as illustrated in FIG. 12, and then, tensile strength is measured. Consequently, results shown in FIGS. 13 to 15 may be obtained.

### Tensile strength measurement result

Referring to FIG. 13(a), it may be confirmed that tensile strength of the comparative examples partially increases at ends on both sides in which the electrode lead and the sealing portion are connected. Also, referring to FIG. 13 (b), it may be confirmed that tensile strength of the preparation examples increases more than that of the comparative examples at ends on both sides and the center in which the electrode lead and the sealing portion are connected. Particularly, in the preparation examples, it may be confirmed that portions having significantly increased tensile strength are portions in which the raised surfaces are formed.

FIGS. 14 and 15 illustrate average values and maximum values of tensile strength in the comparative examples and the preparation examples. Here, the left represents the average value of the tensile strength, and the right represents the maximum value of the tensile strength.

Referring to FIGS. 14 and 15, it may be confirmed that all of the average values of the tensile strength and maximum values of the tensile strength at the electrode upper portion and the electrode lower portion in the preparation examples are greater than those in the comparative examples.

Thus, as a result of the above test, the preparation examples may secure more sufficient tensile strength than the comparative examples, and consequently, it may be confirmed that the sealing portion is significantly prevented from being delaminated and peeled off.

### [Thickness measurement of sealing portion]

### Test preparation and measurement of sealing portion

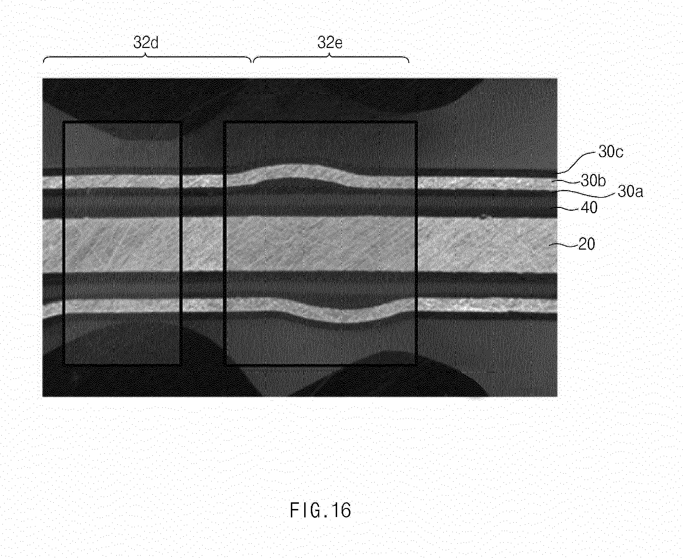

One secondary battery among the secondary batteries used as the preparation examples in the foregoing test is prepared, and then a fluoroscopic (or vision) image of the cross-section of the sealing portion in which the electrode lead is positioned in the secondary battery is captured. Thus, the cross-sectional picture of the sealing portion is prepared as in FIG. 16.

Then, as in FIG. 16, each of the thickness of the sealing portion in which the raised surface 32e is positioned and the thickness of the sealing portion in which the compressed surface 32d is positioned is measured. That is, thicknesses of the resin layer, the metal layer, and the insulating layer positioned in the compressed surface are measured, and the thicknesses of the resin layer 30a, the metal layer 30b, and the insulating layer 30c positioned in the raised surface 32e are measured. Here, each of the thickness of the sealing portion positioned in the positive electrode lead and the thickness of the sealing portion positioned in the negative electrode lead is measured.

Also, the thicknesses of raw materials of the resin layer, the metal layer, and the insulating layer provided int the battery case are measured in advance before the sealing portion is sealed.

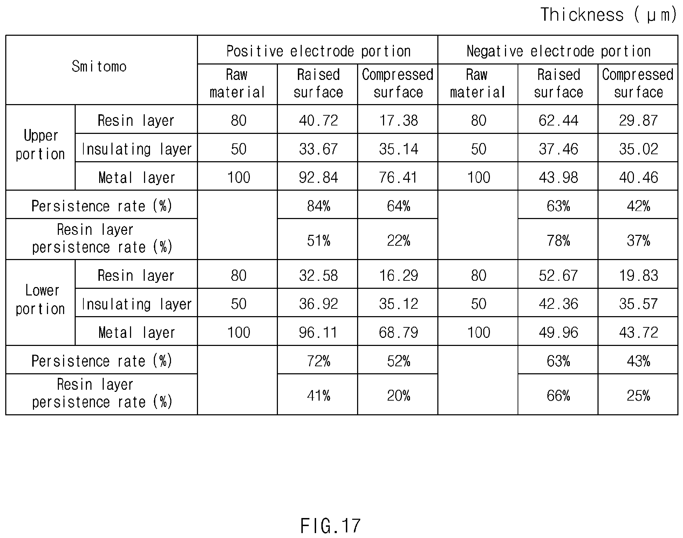

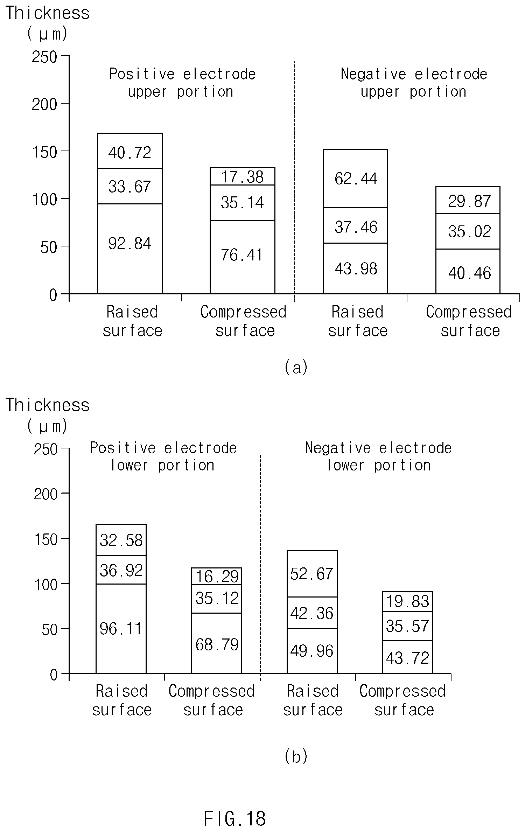

As a result of the measurement, a table as shown in FIG. 17 may be obtained. Also, for ease of comparison, as a result of showing only thicknesses of the resin layer, the insulating layer, and the metal layer of the raised surface and the compressed surface among the measurement values illustrated in FIG. 17, bar graphs as in FIG. 18 may be obtained.

### Thickness measurement result of sealing portion

Referring to FIGS. 17 and 18, it may be confirmed that the thicknesses of the resin layer, the metal layer, and the insulating layer positioned in the raised surface and the compressed surface become less than the thicknesses of the resin layer, the metal layer, and the insulating layer positioned in a raw material.

Particularly, it may be confirmed that a difference in thicknesses of the resin layer positioned in the raised surface and the compressed surface is greater than those of the insulating layer and the metal layer positioned in the raised surface and the compressed surface. From this, it may be seen that the resin layer positioned in the raised surface is compressed less than the resin layer positioned in the compressed surface and thus has a large thickness.

That is, a persistence rate of the resin layer positioned in the raised surface in a positive electrode lead upper portion is 51%, and a persistence rate of the resin layer positioned in the compressed surface is 22%. Thus, it may be confirmed that a thickness difference of more than two times occurs. Also, a persistence rate of the resin layer positioned in the raised surface in a positive electrode lead lower portion is 32.58%, and a persistence rate of the resin layer positioned in the compressed surface is 16.29%. Thus, it may be confirmed that a thickness difference of two times occurs.

In addition, a persistence rate of the resin layer positioned in the raised surface in a negative electrode lead upper portion is 78%, and a persistence rate of the resin layer positioned in the compressed surface is 37%. Thus, it may be confirmed that a thickness difference of more than two times occurs. That is, a persistence rate of the resin layer positioned in the raised surface in a negative electrode lead lower portion is 66%, and a persistence rate of the resin layer positioned in the compressed surface is 25%. Thus, it may be confirmed that a thickness difference of two times occurs.

Thus, as a result of the thickness measurement of the sealing portion, it may be confirmed that the resin layer positioned in the raised surface has a greater thickness than the resin layer positioned in the compressed surface.

### [Venting occurrence test]

### Venting occurrence test preparation

The same six comparative examples (Comparative example 1 to 6) as the secondary batteries in the comparative examples used in the tensile strength test are prepared, and the same two preparation examples (Preparation example 1 to 2) as the secondary batteries in the preparation examples used in the tensile strength test are prepared.

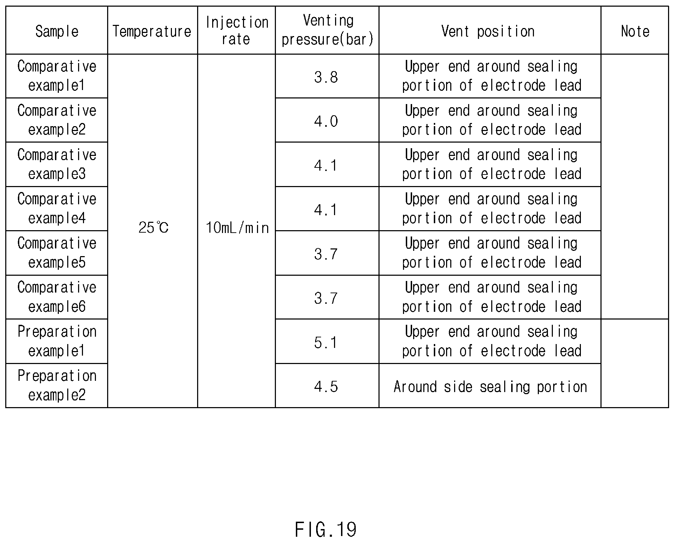

Then, a gas at 25°C is injected at a rate of 10 mL/min into the preparation examples and the comparative examples prepared as described above, and vent pressure is measured at a time when venting occurs. As a result, a table as shown in FIG. 19 may be obtained.

### Venting occurrence test result

Referring to FIG. 19, venting pressure of Comparative example 1 was measured as 3.8 bar, venting pressure of Comparative example 2 was measured as 4.0 bar, venting pressure of Comparative example 3 was measured as 4.1 bar, venting pressure of Comparative example 4 was measured as 4.1 bar, venting pressure of Comparative example 5 was measured as 3.7 bar, and venting pressure of Comparative example 6 was measured as 3.7 bar.

Also, venting pressure of Preparation example 1 was measured as 5.1 bar, and venting pressure of Preparation example 2 was measured as 4.5 bar.

As a result of the above measurement, it may be confirmed that the preparation examples have greater vent pressure than the comparative examples. From this, it may be predicted that the sealing force of the sealing portion may significantly increase, and the front end of the sealing portion may secure sufficient tensile strength. Accordingly, the sealing portion may be prevented from being delaminated or peeled off. Particularly, in Preparation example 2, venting occurred at the side of the sealing portion. From this, it may be confirmed that the sealing portion in which the electrode lead is positioned has greater sealing force and tensile strength than the sealing portion in which the electrode lead is not present.

The scope of the present invention is defined by the appended claims rather than the detailed description, and various embodiments derived from the meaning and scope of the claims and their equivalent concepts are also possible.

### [Description of the Symbols]

- 1:: Secondary battery
- 10:: Electrode assembly
- 11:: Electrode tab
- 20:: Electrode lead
- 30:: Battery case

- 30a:: Resin layer
- 30b:: Metal layer
- 30c:: Insulating layer
- 31:: Accommodation portion
- 32:: Sealing portion
- 32a:: Connection-sealing region
- 32b:: Front end-sealing region
- 32c:: Reinforcement-sealing region
- 32d:: Compressed surface
- 32e:: Raised surface
- 100:: Secondary battery manufacturing apparatus
- 110:: Pressing member
- 111:: Connection-sealing part
- 112:: Front end-sealing part
- 113:: Reinforcement-sealing part
- 113a:: Compression protrusion
- 113b:: Compression groove

## Claims

1. A secondary battery comprising:
an electrode assembly provided with an electrode tab;
an electrode lead coupled to the electrode tab;
a battery case provided with an accommodation portion configured to accommodate the electrode assembly in a state in which a front end of the electrode lead is drawn to the outside and a sealing portion configured to seal the accommodation portion; and
a lead film which is provided on the electrode lead positioned in the sealing portion of the battery case,
wherein the sealing portion, through which the electrode lead is drawn, comprises a connection-sealing region connected to the accommodation portion, a front end-sealing region positioned on the opposite side from the connection-sealing region, and a reinforcement-sealing region provided between the connection-sealing region and the front end-sealing region,
wherein the reinforcement-sealing region comprises a compressed surface, which is provided in the sealing portion between the connection-sealing region and the front end-sealing region and recessed into the sealing portion, and raised surfaces, which are provided in the sealing portion between the connection-sealing region and the compressed surface and between the front end-sealing region and the compressed surface and each of which is formed thicker than the compressed surface,
wherein the battery case has a structure in which a resin layer, a metal layer, and an insulating layer are sequentially stacked in a direction from the inside to the outside,
wherein the resin layer of the raised surface is formed thicker than the resin layer of the compressed surface.

2. The secondary battery of claim 1, wherein the resin layer of the raised surface is formed thicker than the resin layer of the compressed surface as the raised surface is compressed less than the compressed surface when the reinforcement-sealing region is formed.

3. The secondary battery of claim 1, wherein the reinforcement-sealing region is formed only in a surface of the sealing portion corresponding to a surface of the electrode lead.

4. The secondary battery of claim 3, wherein the compressed surface and the raised surface are elongated in a width direction of the electrode lead, and lengths of the compressed surface and the raised surface are equal to or less than the entire width of the electrode lead, and
ends on both sides of the compressed surface and the raised surface are formed as a straight line portion having the same direction as a longitudinal direction of the electrode lead.

5. The secondary battery of claim 4, wherein a width of the compressed surface is 3 mm to 5 mm.

6. The secondary battery of claim 4, wherein a height from a bottom surface of the compressed surface to a top surface of the raised surface is 30 µm to 50 µm.

7. The secondary battery of claim 1, wherein a thickness of the front end-sealing region positioned in the electrode lead is formed greater than a thickness of the compressed surface of the reinforcement-sealing region.

8. The secondary battery of claim 1, wherein two or more compressed surfaces are provided in a longitudinal direction of the electrode lead, and
raised surfaces are further provided between the two or more compressed surfaces.

9. The secondary battery of claim 1, wherein the reinforcement-sealing region is formed in each of an upper surface and a lower surface of the sealing portion, and
the compressed surface and the raised surface of the reinforcement-sealing region, which are formed in each of the upper surface and the lower surface of the sealing portion, are formed symmetrically or asymmetrically.

10. A secondary battery manufacturing apparatus for manufacturing a secondary battery which comprises an electrode assembly provided with an electrode tab, an electrode lead coupled to the electrode tab, a battery case provided with an accommodation portion configured to accommodate the electrode assembly in a state in which a front end of the electrode lead is drawn to the outside and a sealing portion configured to seal the accommodation portion, and a lead film which is provided on the electrode lead positioned in the sealing portion of the battery case,
wherein the secondary battery manufacturing apparatus comprises a pressing member configured to compress and seal the sealing portion in which the electrode lead is positioned,
wherein the pressing member comprises a connection-sealing part configured to compress surfaces of the sealing portion, which are connected to the accommodation portion, so as to form a connection-sealing region, a front end-sealing part configured to compress surfaces of the sealing portion, which are positioned on the opposite side from the connection-sealing region, so as to form a front end-sealing region, and a reinforcement-sealing part configured to compress surfaces of the sealing portion, which are positioned between the connection-sealing part and the front end-sealing part, so as to form a reinforcement-sealing region made of a compressed surface and a raised surface,
wherein the reinforcement-sealing part comprises a compression protrusion, which compresses the sealing portion between the connection-sealing region and the front end-sealing region and forms the compressed surface recessed into the sealing portion, and a compression groove, which compresses the sealing portion between the compression protrusion and the connection-sealing part and between the compression protrusion and the front end-sealing part so as to be recessed less than the compressed surface and forms the raised surface thicker than the compressed surface,
wherein as the front end-sealing part protrudes less than the compression protrusion when viewed in the battery case, a thickness of the front end-sealing region is formed greater than a thickness of the compressed surface of the reinforcement-sealing region.

11. The secondary battery manufacturing apparatus of claim 10, wherein the pressing member compresses and seals only a surface of the sealing portion corresponding to a surface of the electrode lead.

12. The secondary battery manufacturing apparatus of claim 11, wherein the compression protrusion and the compression groove are elongated in a width direction of the electrode lead, and lengths of the compression protrusion and the compression groove are equal to or less than the entire width of the electrode lead, and
ends on both sides of the compression protrusion and the compression groove are formed as a straight line portion having the same direction as a longitudinal direction of the electrode lead.

13. A secondary battery manufacturing method comprising:
preparing an electrode assembly provided with an electrode tab;
coupling an electrode lead to the electrode tab of the electrode assembly;
accommodating the electrode assembly in an accommodation portion of a battery case in a state in which a front end of the electrode lead is drawn to the outside, and attaching a lead film to the electrode lead positioned in a sealing portion of the battery case; and
compressing and sealing the sealing portion of the battery case through which the electrode lead is drawn,
wherein the sealing comprises:
a connection-sealing process of compressing surfaces of the sealing portion, which are connected to the accommodation portion, so as to form a connection-sealing region;
a front end-sealing process of compressing surfaces of the sealing portion, which are positioned on the opposite side from the connection-sealing region, so as to form a front end-sealing region; and
a reinforcement-sealing process of compressing surfaces of the sealing portion, which are positioned between the connection-sealing region and the front end-sealing region, so as to form a reinforcement-sealing region made of a compressed surface and a raised surface,
wherein the reinforcement-sealing process comprises compressing the sealing portion between the connection-sealing region and the front end-sealing region so as to be recessed and forming the compressed surface, and compressing the sealing portion between the compressed surface and the connection-sealing region and between the compressed surface and the front end-sealing region so as to be recessed less than the compressed surface and forming the raised surface thicker than the compressed surface,
wherein in the accommodating, the battery case has a structure in which a resin layer, a metal layer, and an insulating layer are sequentially stacked in a direction from the inside to the outside, and
in the sealing, the resin layer of the raised surface has a thickness greater than that of the resin layer of the compressed surface.

14. The secondary battery manufacturing method of claim 13, wherein the reinforcement-sealing region is formed only in a surface of the sealing portion corresponding to a surface of the electrode lead.

15. The secondary battery manufacturing method of claim 14, wherein the compressed surface and the raised surface are elongated in a width direction of the electrode lead, and lengths of the compressed surface and the raised surface are equal to or less than the entire width of the electrode lead, and
ends on both sides of the compressed surface and the raised surface are formed as a straight line portion having the same direction as a longitudinal direction of the electrode lead.
